# EUROPÄISCHE PATENTSCHRIFT

(11) **EP 1 317 654 B1**
(45) Veröffentlichungstag und Bekanntmachung des Hinweises auf die Patenterteilung: **22.04.2009**
(21) Anmeldenummer: 01971688.5
(22) Anmeldetag: 01.09.2001
(51) Int. Cl.: G01C 21/32

(54) **VORRICHTUNG ZUR ERZEUGUNG UND/ODER VERARBEITUNG VON NAVIGATIONSINFORMATIONEN**
DEVICE FOR GENERATING AND/OR PROCESSING NAVIGATIONAL INFORMATION
DISPOSITIF POUR LA GENERATION OU LE TRAITEMENT D'INFORMATIONS DE NAVIGATION

(30) Priorität: 07.09.2000 DE 10044123
(43) Veröffentlichungstag der Anmeldung: 11.06.2003
(73) Patentinhaber: ROBERT BOSCH GMBH, 70442 Stuttgart (DE)
(72) Erfinder: HAHLWEG, Cornelius, 22147 Hamburg (DE); KERSKEN, Ulrich, 31199 Diekholzen (DE)
(86) Internationale Anmeldenummer: PCT/DE2001/003362
(87) Internationale Veröffentlichungsnummer: WO 2002/021079

(56) Entgegenhaltungen:
- EP-A- 0 654 775
- EP-A- 0 932 134

## Beschreibung

### Stand der Technik

Die Erfindung geht aus von einer Vorrichtung zur Erzeugung und/oder Verarbeitung von Navigationsinformationen nach dem Oberbegriff des Anspruchs 1. Solche Vorrichtungen haben in der Regel eine Datenbasis eines Strassennetzes in Form einer digitalen Karte. Auf einer solchen Datenbasis erlaubt es eine solche Vorrichtung, Ortungs- und/oder Zielführungsfunktionen, beispielsweise für ein Kraftfahrzeug, durchzuführen. Aus der Europäischen Patentanmeldung EP 0 932 134 A1 ist ein Positionsinformationssystem bekannt, das in der Lage ist, eine in einer Datenbasis eines Endgerätes nicht vorhandene Position relativ zu anderen Positionen anzuzeigen. Aus der europäischen Patentanmeldung EP 0 654 775 A1 ist eine Karteninformationsregenerierungsvorrichtung bekannt.

### Vorteile der Erfindung

Die erfindungsgemäße Vorrichtung mit den kennzeichnenden Merkmalen des unabhängigen Anspruchs hat demgegenüber den Vorteil, dass die Durchführung von Ortungs- und/oder Zielführungsfunktionen auch mit Zielen, d. h. geographischen Punkten, möglich ist, die nicht in der Datenbasis verfügbar sind, auf die die Vorrichtung standardmäßig Zugriff hat. Erfindungsgemäß wird nämlich der Vorrichtung eine Erweiterung der Datenbasis in Form von zweiten Ortsinformationen zur Verfügung gestellt, wobei die zweiten Ortsinformationen die ersten Ortsinformationen ergänzten, beispielsweise dadurch, dass zusätzliche geographische Punkte bzw. zusätzliche Objekte, die geographische Punkte enthalten, insbesondere POIs (Points of interrest) oder ganze Kartenausschnitte, der Vorrichtung zur Verfügung gestellt werden. Erst durch die zweiten Ortsinformationen wird es der erfindungsgemäßen Vorrichtung ermöglicht, geographische Punkte, die in der Datenbasis, d.h. den ersten Ortsinformationen nicht als navigabel angesehen werden, in einer Navigationsaufgabe zu verwenden.

Weiterhin ist von Vorteil, dass die ersten Ortsinformationen eine Datenbasis ist, die ein Straßennetz zumindest teilweise umfasst. Die Erfindung ist damit in vorteilhafter Weise auch auf Straßennetze umfassende erste Ortsinformationen anbindbar.

Weiterhin ist von Vorteil, dass die zweiten Ortsinformationen eine Erweiterung der Datenbasis ist, Dadurch können durch das Zusammenspiel der ersten Ortsinformationen und der zweiten Ortsinformationen Punkte navigabel angebunden werden, die allein aufgrund der ersten Ortsinformationen entweder überhaupt nicht in der Datenbasis vorhanden sind oder zwar vorhanden, jedoch nicht navigabel anwendbar sind.

Weiterhin ist von Vorteil, dass die zweiten Ortsinformationen Objekte von beliebiger Komplexität umfassen. Dadurch ist die erfindungsgemäße Vorrichtung bezüglich der die ersten Ortsinformationen ergänzenden zweiten Ortsinformationen sehr flexibel. Insbesondere ist es erfindungsgemäß vorgesehen, einzelne geographische Punkte, ganze Streckenzüge, d.h. Abfolgen von geographischen Punkten, oder auch komplette Netze von geographischen Punkten, d.h. Teile von Karten, als zweite Ortsinformationen vorzusehen.

Weiterhin ist von Vorteil, dass der Vorrichtung erste Speichermittel zugeordnet sind und dass die zweiten Ortsinformationen in den ersten Speichermitteln speicherbar sind. Dadurch ist es möglich, dass die zweiten Ortsinformationen während einer beliebigen Dauer in der erfindungsgemäßen Vorrichtung zur Erzeugung und/oder Verarbeitung von Navigationsinformationen zur Verfügung stehen. Eine erneute Übertragung der zweiten Ortsinformationen zur erfindungsgemäßen Vorrichtung erübrigt sich daher, was Aufwand, Kosten und eine etwaige Einschränkung der Betriebsbereitschaft der Vorrichtung verringert.

Weiterhin ist von Vorteil, dass der zweite Punkt ein Eintrittspunkt in den durch die ersten Ortsinformationen repräsentierten Teilbereich des Straßennetzes und/oder ein Austrittspunkt aus dem durch die ersten Ortsinformationen repräsentierten Teilbereich des Straßennetzes ist. Dadurch ist eine eindeutige Schnittstelle zwischen den ersten und zweiten Ortsinformationen gegeben.

Weiterhin ist von Vorteil, dass der zweite Punkt als Zwischenziel zur Durchführung einer Zielführung und/oder einer Ortung nutzbar ist. Dadurch werden Punkte navigabel anbindbar, die allein aufgrund der Datenbasis der ersten Ortsinformationen diese Eigenschaft nicht aufweisen.

Weiterhin ist von Vorteil, dass nach der Durchführung der Zielführung und/oder der Ortung zum zweiten Punkt eine Zielführung und/oder eine Ortung zu einem Zielpunkt durchgeführt wird. Dadurch wird eine Navigation und/oder Ortung zwischen beliebigen Punkten der ersten und zweiten Ortsinformationen möglich.

Weiterhin ist von Vorteil, dass die zweiten Ortsinformationen (34) zumindest die bei der Zielführung und/oder der Ortung abgefahrene Strecke zwischen dem zweiten Punkt und dem Zielpunkt repräsentieren. Damit wird es erst durch die zweiten Ortsinformationen ermöglicht, eine Navigation und/oder eine Ortung zwischen dem zweiten Punkt und dem Zielpunkt durchzuführen.

Weiterhin ist von Vorteil, dass die Vorrichtung einer Mensch-Maschine-Schnittstelle zugeordnet ist und dass das Erreichen des zweiten Punktes an der Mensch-Maschine-Schnittstelle signalisierbar ist. Dadurch ist einem Benutzer der erfindungsgemäßen Vorrichtung in vorteilhafter Weise möglich, das Erreichen der Schnittstelle zwischen den ersten Ortsinformationen und den zweiten Ortsinformationen nachzuvollziehen.

Weiterhin ist von Vorteil, dass der Vorrichtung zweite Speichermittel zugeordnet sind und dass die ersten Ortsinformationen in den zweiten Speichermitteln speicherbar sind. Dadurch wird es der erfindungsgemäßen Vorrichtung ermöglicht, einen schnelleren Zugriff auf die ersten Ortsinformationen zu erhalten, was zu einer schnelleren Verarbeitung und einem damit einhergehenden höheren Komfortniveau der Benutzung der erfindungsgemäßen Vorrichtung beiträgt.

Weiterhin ist von Vorteil, dass die ersten Ortsinformationen und/oder die zweiten Ortsinformationen schnurlos und/oder drahtgebunden zu der Vorrichtung übertragbar sind. Damit ist die erfindungsgemäße Vorrichtung auch unabhängig von Speichermedien, auf denen Daten in unveränderbarer Form gespeichert sind, wie beispielsweise CD-ROM-Datenträger oder ähnliches, verwendbar. Der Datenbestand, auf den die erfindungsgemäße Vorrichtung Zugriff hat, kann somit ständig aktuell gehalten werden.

### Zeichnung

Ein Ausführungsbeispiel der Erfindung ist in der Zeichnung dargestellt und in der nachfolgenden Beschreibung näher erläutert. Es zeigen
Figur 1 ein Beispiel für ein Straßennetz mit einem Zielpunkt,
Figur 2 ein Beispiel für eine Repräsentation des Straßennetzes aus Figur 1 in ersten und zweiten Ortsinformationen,
Figur 3 die gemeinsame Darstellung der ersten und zweiten Ortsinformationen als Repräsentation des Straßennetzes und
Figur 4 ein Blockschaltbild der erfindungsgemäßen Vorrichtung.

### Beschreibung des Ausführungsbeispiels

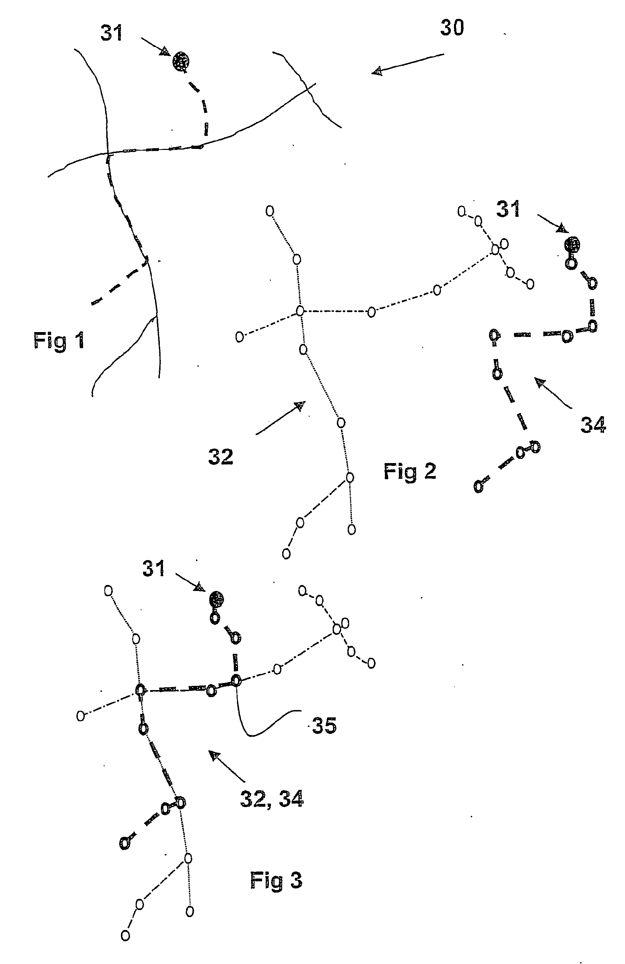

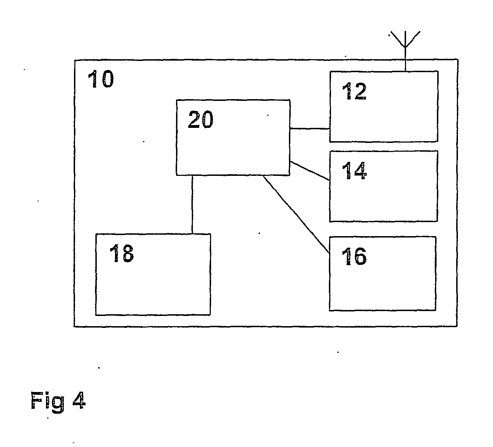

Figur 1 zeigt ein Beispiel für ein Straßennetz 30, anhand dessen eine (in Figur 4 näher erläuterte) erfindungsgemäße Vorrichtung 10 und ihre Funktionsweise näher erläutert wird. Das Straßennetz 30 umfasst einen Zielpunkt 31, der im Ausführungsbeispiel als Endpunkt einer Zielführungsfunktion vorgesehen ist. Anstelle von Zielführung wird im Folgenden auch der Begriff Routing bzw. Navigationsfunktion verwendet.

In Figur 2 sind erste Ortsinformationen 32 und zweite Ortsinformationen 34 in Form von Abfolgen von Punkten bzw. in Form von Netzen von Punkten dargestellt. Die ersten und die zweiten Ortsinformationen 32, 34 repräsentieren zusammen das Straßennetz 30 aus Figur 1. Im Ausführungsbeispiel wird angenommen, dass die ersten Ortsinformationen 32 Teil einer Datenbasis ist, die das Straßennetz 30 zumindest teilweise umfasst. Die Datenbasis wird im Folgenden auch als digitale Karte bezeichnet. Die ersten Ortsinformationen 32 umfassen die Datenbasis bzw. den sie repräsentierenden Teil des Straßennetzes 30 in beliebiger Form, beispielsweise in Form von Streckenzügen, die an Kreuzungspunkten miteinander verbunden sind oder in Form von geschlossenen oder offenen Maschen. Die zweiten Ortsinformationen 34 umfassen ebenfalls eine Repräsentation eines Teilbereichs des Straßennetzes 30, wobei die ersten Ortsinformationen 32 und die zweiten Ortsinformationen 34 zusammengenommen das gesamte für das Anwendungsbeispiel relevante Straßennetz 30 repräsentieren. Im beschriebenen Ausführungsbeispiel ist die Sachlage die, dass die zweiten Ortsinformationen 34 den Zielpunkt 31 umfassen, der außerhalb des durch die ersten Ortsinformationen 32 repräsentierten Straßennetzes 30 liegt.

In Figur 3 ist die digitale Karte dargestellt, die sich ergibt, wenn die ersten Ortsinformationen 32 und die zweiten Ortsinformationen 34 des Ausführungsbeispiels gemeinsam betrachtet werden. Das gesamte in Figur 1 dargestellte und für das Ausführungsbeispiel relevante Straßennetz 30 wird dann durch die Ortsinformationen 32, 34 repräsentiert.

Sowohl in Figur 2 als auch in Figur 3 sind Punkte, insbesondere geographische Punkte, die Teil der ersten Ortsinformationen 32 oder Teil der zweiten Ortsinformationen 34 sind, mittels eines annähernd kreisförmigen Zeichens dargestellt. Die Punkte der ersten Ortsinformationen 32 und der zweiten Ortsinformationen 34 sind in Figur 2 und 3 zu Streckenzügen zusammengefasst. Jeweils benachbarte Punkte auf einem Streckenzug sind dabei durch sogenannte Kanten verbunden, wobei die Kanten in der Zeichnung als (durchgehend oder unterbrochen gezeichnete) Linien dargestellt sind. Streckenzüge können sich dabei überkreuzen, wobei Kreuzungspunkte entstehen können, die (in der Regel jeweils als Punkte) Teil jedes der sich kreuzenden Streckenzüge sind. So können die ersten Ortsinformationen 32 als digitale Repräsentation eines Teilbereichs des Straßennetzes 30 in Form von hier nicht näher bezeichneten Streckenzügen aufgefasst werden. Die Kanten des ersten Streckenzuges der ersten Ortsinformationen 32 sind im Ausführungsbeispiel punktiert dargestellt. Die Kanten des zweiten Streckenzugs der ersten Ortsinformationen 32 sind im Ausführungsbeispiel gestrichpunktet dargestellt. Die Kanten des dritten Streckenzugs der ersten Ortsinformationen 32 sind im Ausführungsbeispiel mit kürzeren Strichen gestrichelt dargestellt. Die Kanten des vierten Streckenzugs der ersten Ortsinformationen 32 sind im Ausführungsbeispiel mit längeren Strichen gestrichelt dargestellt. Die Kanten der Streckenzüge der ersten Ortsinformationen 32 sind jeweils in nichtfetter Strichstärke dargestellt. Die zweiten Ortsinformationen 34 enthalten im Ausführungsbeispiel lediglich einen einzigen Streckenzug, dessen Punkte und Kanten jeweils in fetter Strichstärke dargestellt sind.

In Figur 3 erkennt man, dass die zweiten Ortsinformationen 34 die ersten Ortsinformationen 32 teilweise überlagern. Dies ist für einen Teilbereich des ersten Streckenzugs und des zweiten Streckenzugs der ersten Ortsinformationen 32 der Fall. Zwischen dem Zielpunkt 31 der zweiten Ortsinformationen 34 und dem Überlappungsbereich der Ortsinformationen 32, 34 überlappen sich die ersten Ortsinformationen 32 und die zweiten Ortsinformationen 34 nicht. Durch die Tatsache, dass sich die ersten und die zweiten Ortsinformationen 32, 34 teilweise überlappen und teilweise nicht überlappen, wird ein zweiter Punkt 35 definiert, der den Übergang zwischen dem sich überlappenden Bereich der ersten und zweiten Ortsinformationen 32, 34 und dem sich nicht überlappenden Bereich der Ortsinformationen 32, 34 markiert. Im Ausführungsbeispiel ist der zweite Punkt 35 kein Punkt der ersten Ortsinformationen 32, sondern liegt auf einer Kante zwischen zwei Punkten des zweiten Streckenzugs der ersten Ortsinformationen 32. In der Regel ist der zweite Punkt 35 damit nicht navigabel in die ersten Ortsinformationen 32 integriert. Erst durch Ergänzung der ersten Ortsinformationen 32 durch die zweiten Ortsinformationen 34 und der Tatsache, dass die zweiten Ortsinformationen 34 den zweiten Punkt 35 nicht nur als Teil einer Kante, sondern auch als Punkt enthalten, wird der zweite Punkt 35 navigabel in die Repräsentation des Straßennetzes 30 eingebunden. Die Qualifikation als navigabel bedeutet in diesem Zusammenhang für einen Punkt, dass für einen solchen Punkt Navigationsinformationen erzeugbar und/oder verarbeitbar sind. Durch die Ergänzung der ersten Ortsinformationen 32 durch die zweiten Ortsinformationen 34 wird jedoch nicht nur der zweite Punkt 35 navigabel, sondern auch der Zielpunkt 31.

Eine erfinungsgemäße Vorrichtung 10 ermöglicht es somit, dass eine Datenbasis, auf die die Vorrichtung 10 Zugriff hat, derart durch zweite Ortsinformationen 34 ergänzt wird, dass beliebige in der Datenbasis d.h. den ersten Ortsinformationen 32 nicht enthaltene Punkte bzw. Kartenausschnitte durch die zweiten Ortsinformationen 34 navigabel in die Datenbasis einbindbar sind.

Eine erfindungsgemäße Vorrichtung 10 ist insbesondere als Telematikendgerät 10 oder Navigationsgerät 10 ausgebildet. Solche Geräte umfassen in der Regel bzw. bieten Zugriff auf eine eigene Datenbasis in Form einer digitalen Karte. Eine solche Datenbasis kann dabei sowohl in Form des Inhalts eines Speichermediums, beispielsweise einer CD-ROM, als auch in Form einer zentralen Datenbasis auf einer Datenverarbeitungsanlage eines Diensteanbieters vorgesehen sein. Die Datenbasis in Form der ersten Ortsinformationen 32 kann bei der erfindungsgemäßen Vorrichtung 10 bzw. dem erfindungsgemäßen Telematikendgerät 10 oder Navigationsgerät 10 durch die zweiten Ortsinformationen 34 in Form von neu hinzuzuladenden Objekten ergänzt bzw. erweitert werden.

In Figur 4 ist die erfindungsgemäße Vorrichtung 10 als Blockschaltbild dargestellt. Die Vorrichtung 10 umfasst dabei eine Steuereinrichtung 20, die jeweils mit einem ersten Speicher 14 als erste Speichermittel 14, einem zweiten Speicher 16 als zweite Speichermittel 16 und einer Mensch-Maschine-Schnittstelle 18 verbunden ist. Optional umfasst die Vorrichtung 10 auch eine Sende-/Empfangseinheit 12 zur drahtlosen oder drahtgebundenen Datenübertragung. In den zweiten Speichermitteln 16 sind in einer bevorzugten Ausführungsform die ersten Ortsinformationen 32 abgelegt. In den ersten Speichermitteln 14 sind die zweiten Ortsinformationen 34 abgelegt. Die zweiten Ortsinformationen 34 können bei Vorhandensein einer Sende-/Empfangseinheit 12 mittels einer drahtgebundenen oder drahtlosen Übertragung eingelesen bzw. erweitert oder modifiziert werden. Hierzu empfängt die Sende-/Empfangseinheit 12 die ändernden oder die ergänzenden Informationen und die Steuereinheit 20 koordiniert deren Speicherung in den ersten Speichermitteln 14. Alternativ dazu können die zweiten Ortsinformationen 34 auch in die ersten Speichermittel 14 mittels eines Speichermediums, beispielsweise einer aktualisierten CD-ROM, eingebracht werden. Ebenso ergeben sich für die Einspeicherung der ersten Ortsinformationen 32 in die zweiten Speichermittel 16 mehrere Möglichkeiten, z.B. über die Sende-/Empfangseinheit 12 oder beispielsweise über das Einbringen mittels Speichermedien oder auch die feste hardwaremäßige Vorgabe einer Datenbasis in den zweiten Speichermitteln 16. Die ersten und die zweiten Speichermittel 14, 16 sind dabei je nach Ausgestaltung als Nur-Lese-Speicher, Schreib-Lese-Speicher in flüchtiger oder nichtflüchtiger Ausführung vorgesehen. Die ersten und zweiten Speichermittel 14, 16 können insbesondere auch zusammengefasst sein.

Mittels der Mensch-Maschine-Schnittstelle 18 kommuniziert die Vorrichtung 10 mit einem Benutzer. Hierbei kann die Mensch-Maschine-Schnittstelle 18 auch als weiteres Gerät, beispielsweise ein Autoradio, ausgebildet sein und die erfindungsgemäße Vorrichtung 10 stellt lediglich die Schnittstelle zu der Mensch-Maschine-Schnittstelle zur Verfügung. Die Steuereinheit 20 der erfindungsgemäßen Vorrichtung 10 verknüpft zur Ausführung einer Navigationsfunktion die ersten Ortsinformationen 32 mit den zweiten Ortsinformationen 34, um den Benutzer beispielsweise zum Zielpunkt 31 zu navigieren. Hierzu verarbeitet die Steuereinheit 20 selbstverständlich auch die Signale von nicht dargestellten Sensoren, wie beispielsweise GPS-Sensoren, Beschleunigungssensoren, Wegstreckensensoren und dergleichen mehr. Falls sich beispielsweise der Benutzer zu Beginn der Ausführung der Navigationsfunktion an einem der Endpunkte des zweiten Streckenzugs der ersten Ortsinformationen 32 des Ausführungsbeispiels befindet und zum Zielpunkt 31 navigiert werden möchte, würde die Vorrichtung 10 den Benutzer zwangsläufig zunächst zum zweiten Punkt 35 navigieren, um anschließend den Teilstreckenzug bis zum Zielpunkt 31 abzuarbeiten. In Bezug auf den durch die ersten Ortsinformationen 32 repräsentierten Teilbereich des Straßennetzes 30 ist der zweite Punkt 35 einer solchen Navigationsaufgabe ein Austrittspunkt: vom zweiten Punkt 35 an bis zum Zielpunkt 31 bewegt sich der Benutzer ausschließlich auf Punkten und Streckenzügen der zweiten Ortsinformationen 34. Falls die Navigationsaufgabe umgekehrt lauten würde, vom Zielpunkt 31 zu einem der Endpunkte des zweiten Streckenzugs der ersten Ortsinformationen 32 zu gelangen, könnte der zweite Punkt 35 entsprechend auch als Eintrittspunkt bezeichnet werden. In jedem Fall wird jedoch der zweite Punkt 35 als Zwischenziel für die Zielführung bzw. Navigation genutzt. Ebenso für eine Ortung ergibt sich die Möglichkeit, den zweiten Punkt 35 als Zwischenziel zu benutzen. Damit ist der zweite Punkt 35 ein navigabel angebundener Übergangspunkt zwischen den ursprünglich vorhandenen ersten Ortsinformationen 32 und den ergänzenden zweiten Ortsinformationen 34.

Damit wird es möglich, auf der Basis bekannter Funktionalitäten von autonomen Navigationssystemen, Navigationsgeräte bereitzustellen, die für eine dynamisierte Navigation vorgesehen sind. Typische Anwendungen sind:
- Zielführung zu einem von einem Diensteanbieter gelieferten POI (Point of Interrest),
- Ergänzung ausgedünnter eigener Karten um detailliertere Kartenfragmente, die von einem Netzwerk oder einem Datenträger bezogen sind,
- Aneinanderfügen von Kartenteilen in Rand- und/oder Überlappungsbereichen, z.B. bei netzwerkunterstützten Navigationssystemen,
- Übergang zwischen Kartenteilen ohne deren vollständiges Zusammenfügen an allen möglichen Übergangspunkten

Ein Beispielsszenario für das beschriebene Ausführungsbeispiel wird dadurch gegeben, dass der Zielpunkt 31 beispielsweise ein Parkhaus bezeichnet, das innerhalb eines Gebäudekomplexes mit eigener Zufahrt gelegen ist. Die eigene Zufahrt für das Parkhaus ist nicht in der dem Navigationsgerät 10 zur Verfügung stehenden Navigationsdatenbasis enthalten, womit es zunächst aus Sicht des Navigationsgerätes 10 nicht angesteuert werden kann. Von einem Diensteanbieter, der über detaillierters (aktuelleres) Kartenmaterial verfügt, wird nun auf Anfrage des Benutzers der erfindungsgemäßen Vorrichtung 10 zu diesem Parkhaus eine Information gesendet, die einer Anfrage zu den zweiten Ortsinformationen 34 entspricht. Die zweiten Ortsinformationen 34 werden, insbesondere mittels eines Map Matching Prozesses in die vorhandene Datenbasis (erste Ortsinformationen 32) eingepaßt. Hierbei wird der zweite Punkt 35 als Übergangspunkt zwischen den ersten und den zweiten Ortsinformationen 32, 34 definiert. Um von einem beliebigen Punkt des "bekannten" Straßennetzes, d.h. von einem beliebigen Punkt der ersten Ortsinformationen 32, zum Zielpunkt 31 zu navigieren, ist der zweite Punkt 35 als Zwischenziel aufzufassen. Dieses Zwischenziel wird als Endpunkt für die Routenberechnung auf der im Gerät ursprünglich vorliegenden Datenbasis, also den ersten Ortsinformationen 32, verwendet. Mit Erreichen diese Zwischenziels wird die Ortung bzw. Zielführung auf dem durch die zweiten Ortsinformationen 34 neu angebundenen Teil des Straßennetzes 30 fortgesetzt bis zum Erreichen des Zielpunktes 31 (Parkhaus).

Erfindungsgemäß ist es insbesondere vorgesehen, dass der Übergang zwischen den ersten Ortsinformationen 32 und den zweiten Ortsinformationen 34, d.h. das Erreichen des zweiten Punktes 35 dem Benutzer über die Mensch-Maschine-Schnittstelle 18, insbesondere optisch oder akustisch, mitgeteilt wird. Dies kann insbesondere dazu verwendet werden, Absicherung gegen Mißbrauch bzw. mangelhafte Datenqualität von seiten des Bereitstellers der ersten Ortsinformationen 32 zu gewährleisten.

## Patentansprüche

1. Vorrichtung (10) zur Erzeugung und/oder Verarbeitung von Navigationsinformationen, wobei die Vorrichtung (10) Zugriff auf erste Ortsinformationen (32) hat, **dadurch gekennzeichnet, dass** von der Vorrichtung (10) zusätzlich zu den ersten Ortsinformationen (32) zweite Ortsinformationen (34) verarbeitbar sind, wobei die zweiten Ortsinformationen (34) mittels eines Map Matching Prozesses in die ersten Ortsinformationen (32) einpassbar sind, wobei mittels der Ortsinformationen (32,34) ein Zielpunkt (31) und ein zweiter Punkt (35) ableitbar sind, wobei für die Punkte Navigationsinformationen erzeugbar und/oder verarbeitbar sind und wobei die zweiten Ortsinformationen (34) zur Ableitung des zweiten Punktes (35) notwendig sind, wobei der zweite Punkt (35) ein Eintrittspunkt in den durch die ersten Ortsinformationen (32) repräsentierten Teilbereich des Strassennetzes (30) und/oder ein Austrittspunkt aus dem durch die ersten Ortsinformationen (32) repräsentierten Teilbereich des Strassennetzes (30) ist.

2. Vorrichtung (109 nach Anspruch 1, **dadurch gekennzeichnet, dass** die ersten Ortsinformationen (32) eine Datenbasis ist, die ein Strassennetz (30) zumindest teilweise umfasst.

3. Vorrichtung (10) nach Anspruch 2, **dadurch gekennzeichnet, dass** die zweiten Ortsinformationen (34) eine Erweiterung der Datenbasis ist.

4. Vorrichtung (10) nach einem der vorhergehenden Ansprüche, **dadurch gekennzeichnet, dass** die zweiten Ortsinformationen (34) Objekte von beliebiger Komplexität umfassen.

5. Vorrichtung (10) nach einem der vorhergehenden Ansprüche, **dadurch gekennzeichnet, dass** der Vorrichtung (10) erste Speichermittel (14) zugeordnet sind und dass die zweiten Ortsinformationen (34) in den ersten Speichermitteln (14) speicherbar sind.

6. Vorrichtung (10) nach einem der vorhergehenden Ansprüche, **dadurch gekennzeichnet, dass** der zweite Punkt (35) als Zwischenziel zur Durchführung einer Zielführung und/oder einer Ortung nutzbar ist.

7. Vorrichtung (10) nach Anspruch 6, **dadurch gekennzeichnet, dass** nach der Durchführung der Zielführung und/oder der Ortung zum zweiten Punkt (35) eine Zielführung und/oder eine Ortung zu dem Zielpunkt (31) durchgeführt wird.

8. Vorrichtung (10) nach Anspruch 7, **dadurch gekennzeichnet, dass** die zweiten Ortsinformationen (34) zumindest die bei der Zielführung und/oder der Ortung abgefahrene Strecke zwischen dem zweiten Punkt (35) und dem Zielpunkt (31) repräsentieren.

9. Vorrichtung (10) nach einem der vorhergehenden Ansprüche, **dadurch gekennzeichnet, dass** die Vorrichtung (10) einer Mensch-Maschine-Schnittstelle (18) zugeordnet ist und dass das Erreichen des zweiten Punktes (35) an der Mensch Maschine-Schnittstelle (18) signalisierbar ist.

10. Vorrichtung (10) nach einem der vorhergehenden Ansprüche, **dadurch gekennzeichnet, dass** der Vorrichtung(10) zweite Speichermittel (16) zugeordnet sind und dass die ersten Ortsinformationen (32) in den zweiten Speichermitteln (16) speicherbar sind.

11. Vorrichtung (10) nach einem der vorhergehenden Ansprüche, **dadurch gekennzeichnet, dass** die ersten Ortsinformationen (32) und/oder die zweien Ortsinformationen (34) schnurlos und/oder drahtgebunden zu der Vorrichtung (10) übertragbar sind.

## Claims

1. Apparatus (10) for producing and/or processing navigation information, wherein the apparatus (10) has access to first location information (32), **characterized in that** the apparatus (10) can process second location information (34) in addition to the first location information (32), wherein the second location information (34) can be fitted into the first location information (32) using a map matching process, wherein the location information (32, 34) can be used to derive a destination (31) and a second point (35), wherein navigation information can be produced and/or processed for the points, and wherein the second location information (34) is required for the purpose of deriving the second point (35), the second point (35) being a point of entry into the subregion of the road network (30) that is represented by the first location information (32) and/or a point of exit from the subregion of the road network (30) that is represented by the first location information (32).

2. Apparatus (10) according to Claim 1, **characterized in that** the first location information (32) is a database which comprises a road network (30) at least in part.

3. Apparatus (10) according to Claim 2, **characterized in that** the second location information (34) is an extension of the database.

4. Apparatus (10) according to one of the preceding claims, **characterized in that** the second location information (34) comprises objects of arbitrary complexity.

5. Apparatus (10) according to one of the preceding claims, **characterized in that** the apparatus (10) has associated first storage means (14) and that the second location information (34) can be stored in the first storage means (14).

6. Apparatus (10) according to one of the preceding claims, **characterized in that** the second point (35) can be used as an intermediate destination for performing routing and/or position-finding.

7. Apparatus (10) according to Claim 6, **characterized in that** the performance of the routing and/or position-finding for the second point (35) is followed by performance of routing and/or position-finding for the destination (31).

8. Apparatus (10) according to Claim 7, **characterized in that** the second location information (34) represents at least the distance between the second point (35) and the destination (31) which is travelled during the routing and/or position-finding.

9. Apparatus (10) according to one of the preceding claims, **characterized in that** the apparatus (10) is associated with a man/machine interface (18) and **in that** arrival at the second point (35) can be signalled on the man/machine interface (18).

10. Apparatus (10) according to one of the preceding claims, **characterized in that** the apparatus (10) has associated second storage means (16) and **in that** the first location information (32) can be stored in the second storage means (16).

11. Apparatus (10) according to one of the preceding claims, **characterized in that** the first location information (32) and/or the second location information (34) can be transmitted to the apparatus (10) wirelessly and/or by wire.

## Revendications

1. Dispositif (10) pour la génération et/ou le traitement d'informations de navigation, dans lequel le dispositif (10) a accès à des premières informations de lieu (32), **caractérisé en ce qu'**en plus des premières informations de lieu (32), le dispositif (10) peut traiter des deuxièmes informations de lieu (34), les deuxièmes informations de lieu (34) pouvant être insérées dans les premières informations de lieu (32) au moyen d'un procédé de Map Matching, un point de destination (31) et un deuxième point (35) pouvant être déduit des informations de lieu (32, 34), des informations de navigation pour les points pouvant être générés et/ou traités, et les deuxièmes informations de lieu (34) étant nécessaires pour en déduire le deuxième point (35), le deuxième point (35) étant un point d'entrée dans le secteur du réseau routier (30) représenté par les premières informations de lieu (32) et/ou un point de sortie du secteur du réseau routier (30) représenté par les premières informations de lieu (32).

2. Dispositif (10) selon la revendication 1, **caractérisé en ce que** les premières informations de lieu (32) sont une base de données comprenant au moins partiellement un réseau routier (30).

3. Dispositif (10) selon la revendication 2, **caractérisé en ce que** les deuxièmes informations de lieu (34) sont une extension de la base de données.

4. Dispositif (10) selon une des revendications précédentes, **caractérisé en ce que** les deuxièmes informations de lieu (34) comprennent des objets de complexité quelconque.

5. Dispositif (10) selon une des revendications précédentes, **caractérisé en ce que** des premiers moyens de mémoire (14) sont attribués au dispositif (10) et **en ce que** les deuxièmes informations de lieu (34) peuvent être mémorisées dans les premiers moyens de mémoire (14).

6. Dispositif (10) selon une des revendications précédentes, **caractérisé en ce que** le deuxième point (35) peut être utilisé comme destination intermédiaire pour l'exécution d'un guidage vers une destination et/ou une localisation.

7. Dispositif (10) selon la revendication 6, **caractérisé en ce qu'**après l'exécution du guidage vers une destination et/ou de la localisation vers le deuxième point (35), on exécute un guidage vers une destination et/ou une localisation vers le point de destination (31).

8. Dispositif (10) selon la revendication 7, **caractérisé en ce que** les deuxièmes informations de lieu (34) représentent au moins le trajet parcouru lors du guidage vers une destination et/ou de la localisation entre le deuxième point (35) et le point de destination (31).

9. Dispositif (10) selon une des revendications précédentes, **caractérisé en ce que** le dispositif (10) est affecté à une interface homme-machine (18) et **en ce que** l'arrivée au deuxième point (35) peut être signalée à l'interface homme-machine (18).

10. Dispositif (10) selon une des revendications précédentes, **caractérisé en ce que** des deuxièmes moyens de mémoire (16) sont affectés au dispositif (10) et **en ce que** les premières informations de lieu (32) peuvent être mémorisées dans les deuxièmes moyens de mémoire (16).

11. Dispositif (10) selon une des revendications précédentes, **caractérisé en ce que** les premières informations de lieu (32) et/ou les deuxièmes informations de lieu (34) peuvent être transmises sans fils et/ou par liaison filaire au dispositif (10).
